# EUROPEAN PATENT APPLICATION

(11) **EP 4 645 097 A1**
(43) Date of publication of application: **05.11.2025**
(21) Application number: 24905147.5
(22) Date of filing: 28.06.2024
(51) Int. Cl.: G06F 11/36, G06F 3/0482, G06F 3/04842, G06F 3/04847

(54) **APPLICATION DEBUGGING METHOD AND APPARATUS, DEVICE AND STORAGE MEDIUM**

(30) Priority: 15.03.2024 CN 202410304268
(71) Applicant: Douyin Vision Co., Ltd., Beijing 100041 (CN)
(72) Inventor: CHENG, Bo, Beijing 100028 (CN); CHENG, Mo, Beijing 100028 (CN)
(74) Representative: Isarpatent
(86) International application number: PCT/CN2024/102736
(87) International publication number: WO 2025/189620

(57) **Abstract**

The embodiment of the disclosure relates to method, apparatus, device and storage medium for debugging an application. The method provided includes: displaying a debugging interface of a target application based on a debugging request for the target application, the target application being constructed based on setting information, and the target application being used for generating a response message for a query message; and displaying, on the debugging interface, debugging information associated with a target query message provided to the target application, the debugging information at least comprising node information associated with a plurality of processing nodes, the plurality of processing nodes corresponding to a process in which the target application processes the target query message, the node information at least indicating a processing state of a respective processing node. In this way, the embodiments of the disclosure can effectively improve the efficiency of debugging applications and reduce the labor cost of debugging applications.

## Description

This application claims priority to Chinese Patent Application No. 2024103042688, filed on March. 15, 2024, entitled "METHOD, APPARATUS, DEVICE AND STORAGE MEDIUM FOR DEBUGGING AN APPLICATION", the entire content of which is incorporated herein by reference.

### FIELD

Example embodiments of the present disclosure generally relate to the field of computers, and in particular, to method, apparatus, device and computer readable storage medium for debugging an application.

### BACKGROUND

After the development and debugging of each component is completed, the application developer needs to integrate each component into the target application and perform overall debugging. In recent years, with the development of artificial intelligence technology, some low code platforms or intelligent application development platforms can help developers build applications more quickly, however, developers have difficulty locating and troubleshooting problems in debugging, which greatly affects the efficiency of application development.

### SUMMARY

In a first aspect of the present disclosure, a method of debugging an application is provided. The method comprises: displaying a debugging interface of a target application based on a debugging request for the target application, the target application being constructed based on setting information, and the target application being used for generating a response message for a query message; and displaying, on the debugging interface, debugging information associated with a target query message provided to the target application, the debugging information at least comprising node information associated with a plurality of processing nodes, the plurality of processing nodes corresponding to a process in which the target application processes the target query message, the node information at least indicating a processing state of a respective processing node.

In a second aspect of the present disclosure, an apparatus for debugging an application is provided. The apparatus comprises a first display module, configured to display a debugging interface of a target application based on a debugging request for the target application, the target application being constructed based on setting information, and the target application being used for generating a response message for a query message; and a second display module, configured to display, on the debugging interface, debugging information associated with a target query message provided to the target application, the debugging information at least comprising node information associated with a plurality of processing nodes, the plurality of processing nodes corresponding to a process in which the target application processes the target query message, the node information at least indicating a processing state of a respective processing node.

**In** a third aspect of the present disclosure, an electronic device is provided. The device comprises at least one processing unit; and at least one memory coupled to the at least one processing unit and storing instructions for execution by the at least one processing unit. The instructions, when executed by the at least one processing unit, cause the device to perform the method of the first aspect.

**In** a fourth aspect of the present disclosure, a computer-readable storage medium is provided. The computer-readable storage medium stores a computer program, and the computer program is executable by the processor to implement the method of the first aspect.

**In** a fifth aspect of the present disclosure, a computer program product is provided. The computer program product comprises computer-executable instructions that, when executed by a processor, implement the method of the first aspect.

**It** should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments according to the present disclosure may be implemented;
FIG. 2 illustrates an example interface according to some embodiments of the present disclosure;
FIG. 3 illustrates an example interface according to some embodiments of the present disclosure;
FIG. 4 illustrates an example interface according to some embodiments of the present disclosure;
FIG. 5A illustrates an example interface according to some embodiments of the present disclosure;
FIG. 5B illustrates an example interface according to some embodiments of the present disclosure;
FIG. 6 illustrates an example interface according to some embodiments of the present disclosure;
FIG. 7 shows a flowchart of an example process of debugging an application according to some embodiments of the present disclosure;
FIG. 8 shows a schematic structural block diagram of an apparatus for debugging an application according to some embodiments of the present disclosure; and
FIG. 9 illustrates a block diagram of an electronic device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section / subsection provided herein is not limiting. Various embodiments are described throughout and any type of embodiments may be included in any section / subsection. Furthermore, the embodiments described in any section / subsection may be combined in any manner with the same section / subsection and / or any other embodiment described in different sections / subsections.

In the description of the embodiments of the present disclosure, the terms "comprising" and the like should be understood to include "comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

Embodiments of the present disclosure may relate to data of a user, acquisition and / or use of data, and the like. These aspects all follow the corresponding laws and regulations and related regulations. In the embodiments of the present disclosure, all data is collected, obtained, processed, processed, forwarded, used, etc. , all of which are performed on the premise that the user knows and confirms. Accordingly, when implementing the embodiments of the present disclosure, the types, the usage scope, the usage scenario of the data or information and the like that may be involved, should be notified to the user and obtain the authorization of the user in an appropriate manner according to the relevant laws and regulations. The specific notification and / or authorization manner may vary according to actual situations and application scenarios, and the scope of the present disclosure is not limited in this respect.

According to the solutions in the present specification and the embodiments, for example, personal information processing is involved, processing may be performed on the premise of having a legality basis (for example, obtaining consent of a personal information subject, or necessary for performing a fulfillment contract), and processing is only within a specified or agreed range. The user's rejection on personal information other than necessary information required by the basic function, does not affect the use of the basic function of the user.

Some application development platforms, for example, support users to implement the development of applications by integrating various components. For example, people can build a smart bot or agent by integrating components such as various plug-ins, knowledge bases, workflows and the like. In such an application development process, the overall debugging of a plurality of components may cause an abnormal running problem. Traditional platforms have difficulty locating failures and troubleshooting for users, which greatly affects the efficiency of application development and debugging.

The embodiment of the present disclosure provides a solution for debugging an application. According to the solution, a debugging interface of a target application may be displayed based on a debugging request for the target application, and the target application is constructed based on setting information, the target application is used for generating a response message for the query message; and debugging information associated with the target query message provided to the target application is displayed on the debugging interface, the debugging information at least comprises node information associated with the plurality of processing nodes, the plurality of processing nodes correspond to the process in which the target application processes the target query message, and the node information at least indicates a processing state of a respective processing node.

In this way, embodiments of the present disclosure can present a corresponding processing node based on a generation link related to the response message of the application, and provide the developer with the node information of each node. Therefore, the embodiment of the present disclosure can enable a user to understand the generation link of the response message and quickly locate the node with the failure, thereby improving the application debugging and application development efficiency.

Various example implementations of this solution are described in detail below in connection with the accompanying drawings.

### EXAMPLE ENVIRONMENT

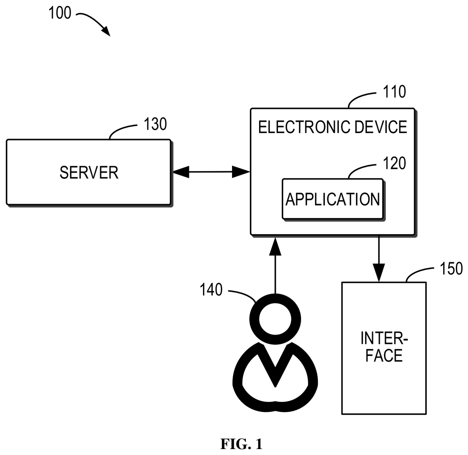

FIG. 1 illustrates a schematic diagram of an example environment 100 in which embodiments of the present disclosure can be implemented. In this example environment 100, an application 120 is installed in the electronic device 110. The user 140 may interact with the application 120 via the electronic device 110 and / or its attachment device. The application 120 may be an application development platform, or any other suitable application having a query and response function. Alternatively, the application 120 may also be a browser, and the user 120 may access the corresponding website through the browser to implement development or debugging of the application.

In environment 100 of FIG. 1, if application 120 is active, electronic device 110 may present interface 150 of the application 120.

In some embodiments, the electronic device 110 communicates with the server 130 to enable provisioning of services to the application 120. The electronic device 110 may be any type of mobile terminal, fixed terminal, or portable terminal, comprising a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio / video player, a digital camera / camcorder, a positioning device, a television receiver, a radio broadcast receiver, an electronic book device, a gaming device, or any combination of the foregoing, including accessories and peripherals of these devices, or any combination thereof. In some embodiments, the electronic device 110 can also support any type of interface for a user (such as a "wearable" circuit, etc.). The server 130 may be various types of computing systems / servers capable of providing computing power, including, but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

Some example embodiments of the present disclosure will be described below with continued reference to the accompanying drawings.

### EXAMPLE INTERACTION

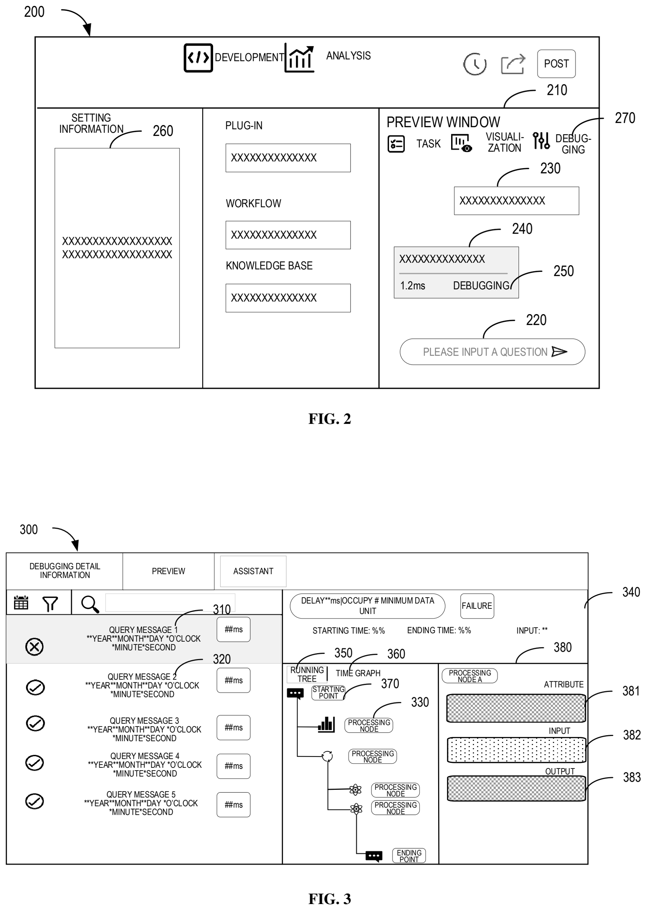

The example process of debugging of an application according to some embodiments of the present disclosure will be described below with reference to FIGS. 2 to 6. FIG. 2 to FIG. 6 illustrate example interface 200 to interface 600 according to some embodiments of the present disclosure, which for example, may be provided by the electronic device 110 shown in FIG. 1.

FIG. 2 illustrates an example development interface 200 according to some embodiments of the present disclosure. As shown in FIG. 2, the electronic device 110 may, for example, support a user (e.g., a developer) developing a target application, for example, bot, by configuring the setting information 260 of the application.

In some embodiments, such a target application may be implemented, for example, based on a machine learning model. Accordingly, such setting information 260 may comprise, but is not limited to, capability setting information of the application, plug-in information, workflow information, knowledge base information, and the like. The target application may be created based on such setting information 260 to support processing the received input message and generate response content for the input message.

As shown in FIG. 2, in some embodiments, the electronic device 110 may display a preview window of the target application. The electronic device 110 may receive the target query message via this preview window. Such a target query message may be input by a developer for debugging the target application.

Taking FIG. 2 as an example, the user may input the target query message 230 from the input box 220 in the preview window 210, such that the electronic device 110 may receive the target query message 230. The electronic device 110 may provide a first response message 240 generated by the target application based on the target query message in the preview window 210. As an example, the target query message 230 may be "How is today's weather", and the corresponding first response message 240 may be "sunny today".

In some embodiments, the electronic device 110 may provide the debugging portal 250 in this preview window 210 in association with the target query message 230 or the first response message 240. As shown in FIG. 2, the electronic device 110 may provide a debugging portal 250 in the message bubble of the first response message 240. The electronic device 110 may receive a debugging request for the target application based on the user's selection of the debugging portal 250.

In some embodiments, the electronic device 110 may display the debugging interface of the target application based on the debugging request for the target application, and display the debugging information associated with the target query message 230 provided to the target application on the debugging interface.

In some embodiments, the electronic device 110 may further provide a debugging portal 270, such debugging portal 270 may, for example, not be associated with a particular query message or response message, and may support the user selecting a message to be debugged in the debugging interface.

FIG. 3 illustrates an example debugging interface 300 according to some embodiments of the present disclosure. As shown in FIG. 3, the electronic device 110 may display, on the debugging interface 300, a plurality of query messages received by the target application, for example, a query message 310, a query message 320, and the like.

In some embodiments, if the user enters the debugging interface 300 through the debugging portal 250 associated with the first response message 240, the target query message 230 corresponding to the first response message 240 will be in the selected state in the list and debugging information associated with the target query message 230 is displayed.

Conversely, if the user enters the debugging interface 300, e.g., through the global debugging portal 270, the electronic device 110 may, for example, default to place the last query message (e.g., the query message 310) in the selected state and display the debugging information associated with the query message 310.

**In** some embodiments, the electronic device 110 may also receive a user's selection of other query messages (e.g., query message 320) to trigger the debugging interface 300 to present debugging information associated with query message 320.

Further, as shown in FIG. 3, using the selected message is the query message 310 as an example, the electronic device 110 may display debugging information about the processing procedure of the query message 310 in the debugging interface 300.

**In** some embodiments, such debugging information may comprise, for example, application level information 340 of the target application with respect to the processing query message 310, which may comprise, for example, a starting time, an ending time, input information, an information type, and the like of processing the query message 310 by the application.

**In** some embodiments, the debugging information may further comprise node information associated with the plurality of processing nodes 330, such plurality of processing nodes 330 may correspond to a process of the target application processing the query message 310.

**In** some embodiments, the process of processing the query message 310 by the target application may be split into a plurality of processing nodes. Taking the intelligent bot as an example, the processing query message 310 may comprise, for example, an agent node, and the agent node may be further refined, for example, to invoke a language model, obtain knowledge information, start a workflow, obtain knowledge information, invoke a language model, and the like.

**In** some embodiments, as shown in FIG. 3, the electronic device 110 may, for example, characterize the plurality of processing nodes 330 for processing the query message 310 by the target application through a running tree 350. In some embodiments, the running tree 350 may indicate a link for the target application to run the plurality of processing nodes 330 in a process of processing the query message 310. For example, the running tree 350 may comprise a starting node 370, and the execution sequence of different processing nodes 330 and the invoking relationship or hierarchical relationship between the processing nodes 330 may be represented by connected lines.

**In** some embodiments, the electronic device 110 may further indicate a processing state of each processing node 330 in the debugging interface 300. As an example, the processing state of the processing node 330 may comprise a normal state or an abnormal state.

**In** some embodiments, the electronic device 110 may distinguish different processing states by different display styles. For example, if the processing node 330 is in an abnormal state, the electronic device 110 may, for example, distinguish and display the processing node 330 by different color styles or font styles, such that the user can quickly locate the abnormal location during the processing procedure of the query message 310.

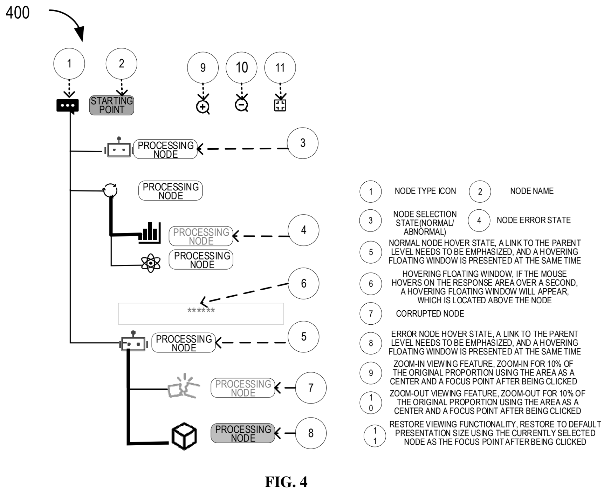

**In** some embodiments, the running tree 350 may present other types of information about each processing node 330. FIG. 4 illustrates a schematic diagram of a running tree according to some embodiments of the present disclosure.

As shown in FIG. 4, the electronic device 110 may display an icon or a name of each processing node in a running tree to facilitate a user to clearly perceive a function or a corresponding processing procedure of each node.

Additionally, the electronic device 110 may receive a selection for the processing node and display it as the selected state. In addition, the electronic device 110 may present different display styles for nodes in an error state.

In some embodiments, when a user hovers over a certain processing node, the electronic device 110 may display a hovering floating window of the processing node and display a connected line between the processing node and its parent processing node. The hovering floating window may, for example, display running information of the processing node.

In some embodiments, the electronic device 110 may also present information about the corrupted node in a running tree and may support the user viewing the hovering floating window by hovering to the corrupted node. The hovering floating window may, for example, display relevant information of the corrupted node.

In some embodiments, the electronic device 110 may also provide one or more controls for zooming-in, zooming-out, or restoring the size of the running tree.

With continued reference to FIG. 3, the electronic device 110 may also receive a user's selection of a particular processing node (e.g., processing node A) and present the processing node's running information 380.

In some embodiments, such running information 380 may comprise attribute information 381 of the processing node, e.g., name, type, state, starting time, ending time, delay, running duration, etc. of the processing node.

In some embodiments, in order to facilitate the user to better understand the running process of the processing node, such running information 381 may further comprise: the input information 382 and the output information 383 of the processing node in the process of processing the query message 310 by the target application, to facilitate the user to perceive whether the processing procedure of the processing node is accurate.

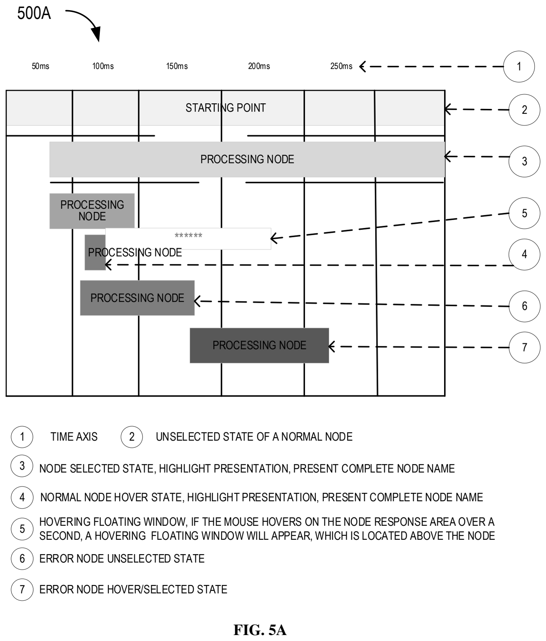

In some embodiments, the electronic device 110 may also support switching to the display a time graph 360 on the debugging interface 300. Specifically, after receiving the request for viewing the time graph 360, the electronic device 110 may display the example time graph 500A shown in FIG. 5A.

As shown in FIG. 5A, the time graph 500A may indicate a relationship between processing periods corresponding to the plurality of processing nodes. As an example, the time graph 500A may comprise a time axis, a starting point of the time axis may correspond to a time point at which the query message starts to be processed, and a clock point thereof may, for example, correspond to a time point at which the query message is processed completed.

As shown in FIG. 5A, each processing node may have a corresponding time period in the time axis to indicate a time point at which the corresponding processing node starts to process and a time point at which the processing node ends processing. In this way, the developer may more clearly perceive the time consumption distribution of each processing node, thereby finding out the processing nodes that may be abnormal.

In some embodiments, the electronic device 110 may receive a selection for the processing node and highlight the processing node to indicate that it is in the selected state. Additionally, the electronic device 110 may also display a corresponding hovering floating window similar to based on a user hovering over a certain processing node to present information about the processing node.

In some embodiments, the electronic device 110 may also display nodes of different processing states differently in the time graph 500A. For example, the electronic device 110 may characterize a processing node running abnormally through a specific color style or font style. Additionally, the electronic device 110 may display a hovering floating window based on the user hovers on the abnormal processing node to present the corresponding information.

In this way, embodiments of the present disclosure can present a corresponding processing node based on the generation link of the application related to the response message, and provide the developer with the node information of each node. Therefore, the embodiment of the present disclosure can enable a user to understand the generation link of the response message and quickly locate the node in which the failure appears, thereby improving the efficiency of the application debugging and application development.

In some embodiments, in order to facilitate the user to more clearly perceive the processing link of the target application, the electronic device 110 may further provide a topological graph associated with the target application to present the path of the target application processing the query message.

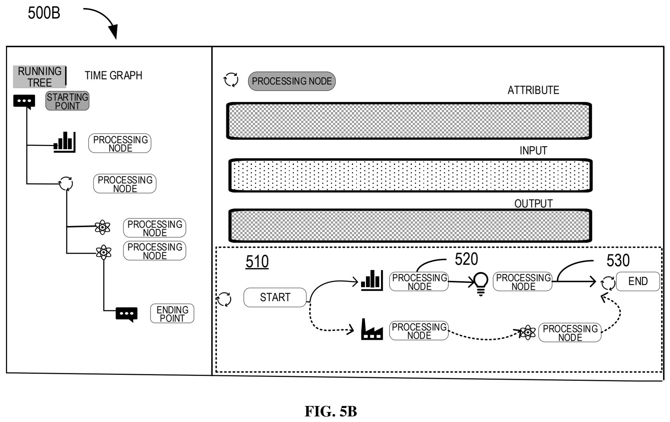

As shown in FIG. 5B, the electronic device 110 may present a topological graph 510 associated with the target application, and the topological graph 510 may comprise, for example, a plurality of processing nodes 520 that the target application uses to process the query request, and characterize all possible paths of the target application by using connected lines between the processing nodes 520.

In some embodiments, the electronic device 110 may display the target path for processing the query message to be debugged in the topological graph 510 differently. For example, the electronic device 110 may display the target path 530 between the plurality of processing nodes 520 experienced by the query message with the target style, and may display other processing paths with different styles.

Similarly, the electronic device 110 may also display processing nodes in different processing states differently in the topological graph 500B to facilitate the user to quickly locate abnormal processing nodes. Additionally, the electronic device 110 may also receive a selection for the processing node 520 by the user to present the running information of the processing node 520.

In some embodiments, when the composition of the agent is relatively complex, the electronic device 110 may split the topological graph into sub-topological graphs independent from each other. For example, the electronic device 110 may respectively load and display the sub-topological graphs corresponding to the respective processing nodes independent from each other, thereby reducing data loading and improving legibility of the topological graph. For example, the electronic device 110 may also receive a selection for a certain specific processing node in the running tree by the user, and further present a sub-topological graph associated with the specific processing node.

Different presentation styles of the debugging information are described above in combination with examples such as a running tree, a time graph, and a topological graph, and specific obtaining logic of the debugging information will be described below.

In some embodiments, the debugging information is generated based on metadata associated with the target application. In some embodiments, the debugging information comprises at least node information associated with the plurality of processing nodes, the plurality of processing nodes corresponds to a process in which the target application processes the target query message, and the node information at least indicates a processing state of the respective processing node. The plurality of processing nodes are nodes integrated into the target application. The node information may comprise, but is not limited to, a delay time, a number of occupied minimum data units, a starting time, an ending time, a channel, a node input, a type of node input, and the like. In some embodiments, the processing state may comprise a failure state, a success state, or the like.

The following describes a collection process of the debugging information.

In some embodiments, the debugging information may be determined based on log information generated by the target application upon processing the target query message. In some embodiments, the log information may be log information collected in real time and / or log information collected asynchronously. The log information collected in real time may comprise, but is not limited to, information collected in real time when a component (for example, an agent) in an application runs, for example, a starting time, an error time, an ending time, and the like of each processing node. The log information collected asynchronously may comprise, but is not limited to, peripheral information, where the peripheral information may be debugging record log information, user feedback records, test log information, metadata data of an agent, and the like.

If the log information is log information collected in real time based on the instrumentation technology, the electronic device 110 may generate log information based on a preset structure protocol, where the preset structure protocol is used to specify structurally recording the details of internal running produced by the target query message according to the preset structure protocol, for example, specifying corresponding invoking records of which invoking is recorded in the log information, processing nodes required to be collected, recording structural relationships between each processing nodes, and the like. The structural relationship corresponding to any two processing nodes may comprise a parent-child relationship invoked by the upstream and the downstream and sibling relationship directly invoked by the same upstream. In some embodiments, after obtaining the log information, the electronic device 110 may further perform a preset data processing operation on the log information through a big data processing engine. The preset data operation comprises a data cleaning operation, a data storage operation, and the like.

Based on such a structure protocol, the real-time running log collected by the electronic device 110 can follow the atomized inter-unit structural relationship, thereby establishing a tree-like structural relationship such as a running tree.

Specifically, the start of the tree structure may be defined as the question input by user sent to the target application, or may be defined as the target application starting to process the input of the user. Accordingly, the termination of the tree structure may be defined as completing the output and delivering it to the user by the target application.

The start / termination of the tree structure may also belong to part of the structure protocol, which determines the slicing rule of the tree structure. Real-time data collection is always running until the target application no longer provides service.

In the real-time data collection, a running starting time point, an error time point, and an ending time point of each processing node are recorded. Therefore, in the case of a box-shaped presentation (for example, a time graph), taking the horizontal axis as time, each box represents a running unit, and the placement position of the box on the horizontal axis is determined by the starting time point of the running unit, and the width of the box on the horizontal axis is determined by the starting time point and the ending time point.

If the processing node is abnormal, there will be an error time point at this time, and the width of the box is determined by the starting time point and the error time point. The sorting order of the box-shaped presentation form on the vertical axis, like the tree-like presentation form, is determined according to the structural relationship of the running units in the structure protocol.

If the log information is the log information collected asynchronously, the electronic device 110 may further establish an association relationship through some instrumentation parameters, and establish an association index record in the big data processing engine, for example, unique identification information corresponding to the user's conversation and the like.

It should be noted that, when the log information is collected based on the instrumentation technology, if a processing node runs abnormally, the currently running atomized operation is marked as abnormal. In addition, when the log information is collected, it is collected based on a preset structure protocol, then the abnormality is mainly atomized, the electronic device may obtain the upstream and downstream of the abnormal processing node, and the location information located in the whole running link.

In the process of establishing the topological graph, the electronic device 110 may establish the original topology according to the meta-information of the target application under some uniqueness feature. The uniqueness feature may comprise a uniqueness mark, version information, and the like of the target application; and the meta information comprises an internal structure constituting the target application, such as a type and a parameter of the large model, an internal preset running process, a preset conversation, and the like.

Since the enabled target application is unique each time the user performs the conversation, when the data is collected in real-time, the uniqueness marks may be used as the public instrumentation parameters to establish the relationship between the conversation and the target application, such that the relationship between the white-boxed user conversation record and the topological graph may be established.

Finally, after the information is processed in the data processing engine, the data query capability is provided to present the topological graph corresponding to the white-boxed user conversation record for the user.

Additionally, the electronic device 110 may also draw a path traversed in the topological graph. Specifically, the collection unit for the real-time data collection needs to be in one-to-one correspondence with the target application composition unit, such that the actual running unit in the real-time data collection is a unit that needs to be lightened in the topological graph, that is, the processing node. When the actual running unit in the white-boxed user conversation record is lightened in the topological graph, these lightened units are connected in series to form a path traversed in the topological graph.

If a running unit has a running abnormality, the lightened node is featured presented in the topological graph, and the abnormal link can be intuitively presented by selecting to featured presenting the upstream and downstream path.

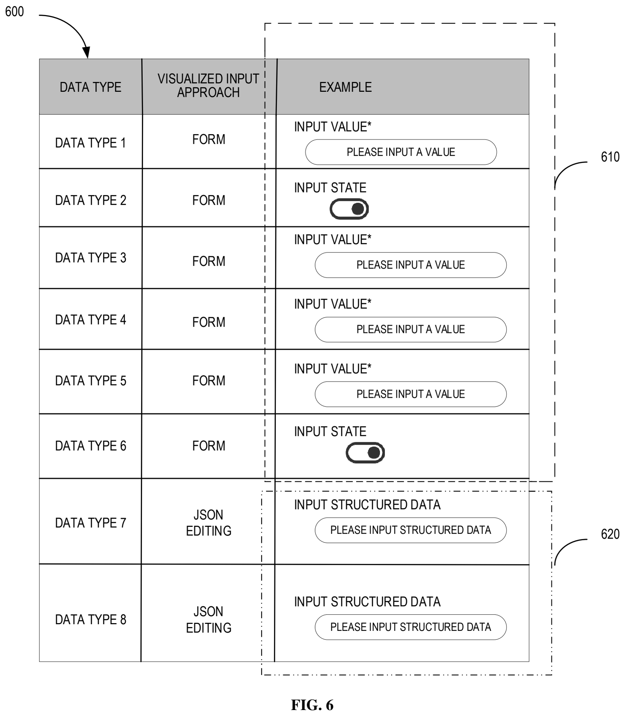

In some embodiments, the electronic device 110 may also provide a node debugging component for debugging a particular processing node to support debugging for a single node. FIG. 6 illustrates an example debugging component 600 according to some embodiments of the present disclosure.

Specifically, as shown in FIG. 6, the debugging component 600 may comprise a first type of input control 610 and a second type of input control 620. Specifically, the input control 610 may be configured to input a value of at least one field. For example, if the data type of the first data portion in the node testing data is a simple data type (e.g., integer, floating point type, string, etc.), the user may input the value of the at least one data field based on the input control 610.

Conversely, if the data type of the second data portion in the node testing data is a complex data type (e.g., an object type consisting of a plurality of fields), the user may input the structured data through the input control 620.

As shown in FIG. 6, the debugging component 600 may be configured to obtain node testing data for the specific processing node. Accordingly, the electronic device 110 may run the processing node to be debugged based on the node testing data, thereby completing debugging for a single processing node. Therefore, the embodiment of the present disclosure can realize that in the process of debugging the application, any processing node in the running link can be selected as the starting point to initiate debugging, and to verify the effect, and the efficiency of debugging the application is improved.

### EXAMPLE PROCESSES

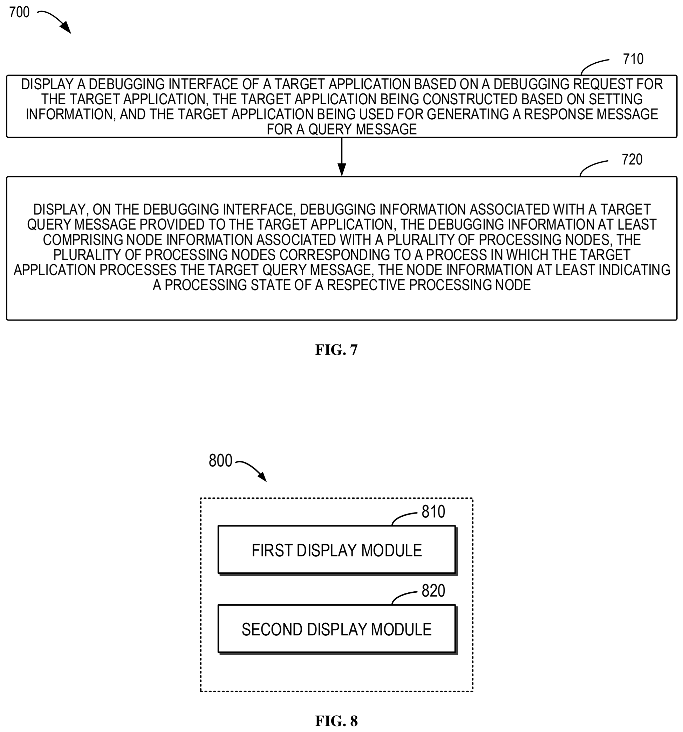

FIG. 7 illustrates a flowchart of an example process 700 for debugging an application, in accordance with some embodiments of the present disclosure. Process 700 may be implemented at electronic device 110. The process 700 is described below with reference to FIG. 1.

As shown in FIG. 7, at block 710, the electronic device 110 displays a debugging interface of a target application based on a debugging request for the target application, the target application being constructed based on setting information, and the target application being used for generating a response message for a query message.

At block 720, the electronic device 110 displays, on the debugging interface, debugging information associated with a target query message provided to the target application, the debugging information at least comprising node information associated with a plurality of processing nodes, the plurality of processing nodes corresponding to a process in which the target application processes the target query message, the node information at least indicating a processing state of a respective processing node.

In some embodiments, the process 700 further comprises: displaying a preview window of the target application; receiving the target query message via the preview window; and providing a first response message generated based on the target query message in the preview window.

In some embodiments, the process 700 further comprises: providing, in the preview window, a debugging portal in association with the target query message or the first response message; and receiving the debugging request for the target application based on a selection for the debugging portal.

In some embodiments, displaying, on the debugging interface, the debugging information associated with the target query message provided to the target application comprises: displaying, on the debugging interface, a set of historical query messages provided to the target application; and displaying, on the debugging interface, the debugging information associated with the target query message based on a selection for the target query message among the set of historical query messages.

**In** some embodiments, displaying, on the debugging interface, the debugging information associated with the target first query message provided to the target application comprises: displaying, on the debugging interface, a running tree associated with the target application, the running tree indicating a link for the target application to run the plurality of processing nodes in a process of processing the target first query message.

In some embodiments, displaying, on the debugging interface, the debugging information associated with the target first query message provided to the target application comprises: displaying, on the debugging interface, a time graph associated with the target application, the time graph presenting a relationship between a plurality of processing periods corresponding to the plurality of processing nodes.

In some embodiments, displaying, on the debugging interface, the debugging information associated with the target first query message provided to the target application comprises: displaying, on the debugging interface, a topological graph associated with the target application, wherein a target path for processing the target query message is displayed differently in the topological graph.

In some embodiments, the process 700 further comprises: receiving a selection for a first processing node among the plurality of processing nodes; and displaying, on the debugging interface, running information of the first processing node, the node information comprising at least one of the following: at least one attribute of the first processing node, an input of the first processing node in a process of processing the target query message by the target application, or an output of the first processing node in a process of processing the target query message by the target application.

In some embodiments, the process 700 further comprises: providing a node debugging component associated with a second processing node among the plurality of processing nodes, the node debugging component comprising at least one input control for obtaining node testing data; and running the second processing node based on the obtained node testing data.

In some embodiments, the at least one input control comprises: a first input control configured to input a value of at least one data field; or a second input control configured to input structured data.

In some embodiments, the debugging information is determined based on log information generated by the target application upon processing the target query message.

In some embodiments, the log information is generated based on a preset structure protocol.

In some embodiments, the debugging information is further generated based on metadata associated with the target application.

### EXAMPLE APPARATUS AND DEVICE

Embodiments of the present disclosure also provide a corresponding apparatus for implementing the above method or process.

FIG. 8 is a schematic structural block diagram of an item editing apparatus 800 according to some embodiments of the present disclosure. The apparatus 800 may be implemented or included in the electronic device 110. The various modules / components in the apparatus 800 may be implemented by hardware, software, firmware, or any combination thereof.

The apparatus 800 comprises a first display module 810 configured to display a debugging interface of a target application based on a debugging request for the target application, the target application being constructed based on setting information, and the target application being used for generating a response message for a query message; and a second display module 820 configured to display, on the debugging interface, debugging information associated with a target query message provided to the target application, the debugging information at least comprising node information associated with a plurality of processing nodes, the plurality of processing nodes corresponding to a process in which the target application processes the target query message, the node information at least indicating a processing state of a respective processing node.

In some embodiments, the apparatus 800 further comprises a display module configured to display a preview window of the target application; a first receiving module configured to receive the target query message via the preview window; and a generating module configured to provide a first response message generated based on the target query message in the preview window.

In some embodiments, the apparatus 800 further comprises a first providing module configured to provide, in the preview window, a debugging portal in association with the target query message or the first response message; and a first receiving module configured to receive the debugging request for the target application based on a selection for the debugging portal.

In some embodiments, the second display module is specifically configured to: display, on the debugging interface, a set of historical query messages provided to the target application; and display, on the debugging interface, the debugging information associated with the target query message based on a selection for the target query message among the set of historical query messages.

In some embodiments, the second display module is specifically configured to: display, on the debugging interface, a running tree associated with the target application, the running tree indicating a link for the target application to run the plurality of processing nodes in a process of processing the target query message.

In some embodiments, the second display module is specifically configured to: display, on the debugging interface, a time graph associated with the target application, the time graph presenting a relationship between a plurality of processing periods corresponding to the plurality of processing nodes.

In some embodiments, the second display module is specifically configured to: display, on the debugging interface, a topological graph associated with the target application, wherein a target path for processing the target query message is displayed differently in the topological graph.

In some embodiments, the apparatus 800 further comprises a third receiving module configured to: receive a selection for a first processing node among the plurality of processing nodes; and a third display module configured to display, on the debugging interface, running information of the first processing node, the node information comprising at least one of the following: at least one attribute of the first processing node, an input of the first processing node in a process of processing the target query message by the target application, or an output of the first processing node in a process of processing the target query message by the target application.

In some embodiments, the apparatus 800 further comprises a second providing module configured to: provide a node debugging component associated with a second processing node among the plurality of processing nodes, the node debugging component comprising at least one input control for obtaining node testing data; and a running module configured to run the second processing node based on the obtained node testing data.

In some embodiments, the at least one input control comprises: a first input control configured to input a value of at least one data field; or a second input control configured to input structured data.

In some embodiments, the debugging information is determined based on log information generated by the target application upon processing the target query message.

In some embodiments, the log information is generated based on a preset structure protocol.

In some embodiments, the debugging information is further generated based on metadata associated with the target application.

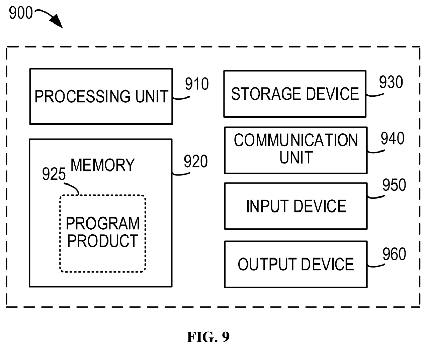

FIG. 9 illustrates a block diagram of an electronic device 900 in which one or more embodiments of the present disclosure may be implemented. It should be understood that the electronic device 900 illustrated in FIG. 9 is merely illustrative and should not constitute any limitation on the functionality and scope of the embodiments described herein. The electronic device 900 shown in FIG. 9 may be configured to implement the electronic device 110 in FIG. 1.

As shown in FIG. 9, the electronic device 900 is in the form of a general-purpose electronic device. Components of the electronic device 900 may include, but are not limited to, one or more processors or processing units 910, a memory 920, a storage device 930, one or more communication units 940, one or more input devices 950, and one or more output devices 960. The processing unit 910 may be an actual or virtual processor and capable of performing various processes according to programs stored in the memory 920. In multiprocessor systems, multiple processing units execute computer-executable instructions in parallel to improve parallel processing capabilities of electronic device 900.

Electronic device 900 typically includes a plurality of computer storage media. Such media may be any available media accessible to the electronic device 900, including, but not limited to, volatile and non-volatile media, removable and non-removable media. The memory 920 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 830 may be a removable or non-removable medium and may include a machine-readable medium, such as a flash drive, magnetic disk, or any other medium, which may be capable of storing information and / or data (e.g., training data for training) and may be accessed within electronic device 900.

The electronic device 900 may further include additional removable / non-removable, volatile / non-volatile storage media. Although not shown in FIG. 9, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 920 may include a computer program product 925 having one or more program modules configured to perform various methods or actions of various embodiments of the present disclosure.

The communication unit 940 is configured to communicate with another electronic device through a communication medium. Additionally, the functionality of components of the electronic device 900 may be implemented in a single computing cluster or multiple computing machines capable of communicating over a communication connection. Thus, the electronic device 800 may operate in a networked environment using logical connections with one or more other servers, network personal computers (PCs), or another network node.

The input device 950 may be one or more input devices such as a mouse, a keyboard, a trackball, or the like. The output device 960 may be one or more output devices, such as a display, a speaker, a printer, or the like. The electronic device 900 may also communicate with one or more external devices (not shown) through the communication unit 940 as needed, external devices such as storage devices, display devices, etc. , communicate with one or more devices that enable a user to interact with the electronic device 900, or communicate with any device (e.g., a network card, a modem, etc. ) that enables the electronic device 900 to communicate with one or more other electronic devices. Such communication may be performed via an input / output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and / or block diagrams of methods, apparatuses, devices, and computer program products implemented in accordance with the present disclosure. It should be understood that each block of the flowchart and / or block diagram, and combinations of blocks in the flowcharts and / or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions / acts specified in the flowchart and / or block diagram. These computer-readable program instructions may also be stored in a computer-readable storage medium that cause the computer, programmable data processing apparatus, and / or other devices to function in a particular manner, such that the computer-readable medium storing instructions includes an article of manufacture including instructions to implement aspects of the functions / acts specified in the flowchart and / or block diagram (s).

The computer-readable program instructions may be loaded onto a computer, other programmable data processing apparatus, or other devices, such that a series of operational steps are performed on a computer, other programmable data processing apparatus, or other devices to produce a computer-implemented process such that the instructions executed on a computer, other programmable data processing apparatus, or other devices implement the functions / acts specified in the flowchart and / or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and / or flowchart, as well as combinations of blocks in the block diagrams and / or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method of debugging an application, comprising:
displaying a debugging interface of a target application based on a debugging request for the target application, the target application being constructed based on setting information, and the target application being used for generating a response message for a query message; and
displaying, on the debugging interface, debugging information associated with a target query message provided to the target application, the debugging information at least comprising node information associated with a plurality of processing nodes, the plurality of processing nodes corresponding to a process in which the target application processes the target query message, the node information at least indicating a processing state of a respective processing node.

2. The method of claim 1, further comprising:
displaying a preview window of the target application;
receiving the target query message via the preview window; and
providing a first response message generated based on the target query message in the preview window.

3. The method of claim 2, further comprising:
providing, in the preview window, a debugging portal in association with the target query message or the first response message; and
receiving the debugging request for the target application based on a selection for the debugging portal.

4. The method of claim 1, wherein displaying, on the debugging interface, the debugging information associated with the target query message provided to the target application comprises:
displaying, on the debugging interface, a set of historical query messages provided to the target application; and
displaying, on the debugging interface, the debugging information associated with the target query message based on a selection for the target query message among the set of historical query messages.

5. The method of claim 1, wherein displaying, on the debugging interface, the debugging information associated with the target query message provided to the target application comprises:
displaying, on the debugging interface, a running tree associated with the target application, the running tree indicating a link for the target application to run the plurality of processing nodes in a process of processing the target query message.

6. The method of claim 1, wherein displaying, on the debugging interface, the debugging information associated with the target query message provided to the target application comprises:
displaying, on the debugging interface, a time graph associated with the target application, the time graph presenting a relationship between a plurality of processing periods corresponding to the plurality of processing nodes.

7. The method of claim 1, wherein displaying, on the debugging interface, the debugging information associated with the target query message provided to the target application comprises:
displaying, on the debugging interface, a topological graph associated with the target application, wherein a target path for processing the target query message is displayed differently in the topological graph.

8. The method of claim 1, further comprising:
receiving a selection for a first processing node among the plurality of processing nodes; and
displaying, on the debugging interface, running information of the first processing node, the node information comprising at least one of the following:
at least one attribute of the first processing node,
an input of the first processing node in a process of processing the target query message by the target application, or
an output of the first processing node in a process of processing the target query message by the target application.

9. The method of claim 1, further comprising:
providing a node debugging component associated with a second processing node among the plurality of processing nodes, the node debugging component comprising at least one input control for obtaining node testing data; and
running the second processing node based on the obtained node testing data.

10. The method of claim 9, wherein the at least one input control comprises:
a first input control configured to input a value of at least one data field; or
a second input control configured to input structured data.

11. The method of claim 1, wherein the debugging information is determined based on log information generated by the target application upon processing the target query message.

12. The method of claim 11, wherein the log information is generated based on a preset structure protocol.

13. The method of claim 11, wherein the debugging information is further generated based on metadata associated with the target application.

14. An apparatus for debugging an application, comprisng:
a first display module, configured to display a debugging interface of a target application based on a debugging request for the target application, the target application being constructed based on setting information, and the target application being used for generating a response message for a query message; and
a second display module, configured to display, on the debugging interface, debugging information associated with a target query message provided to the target application, the debugging information at least comprising node information associated with a plurality of processing nodes, the plurality of processing nodes corresponding to a process in which the target application processes the target query message, the node information at least indicating a processing state of a respective processing node.

15. An electronic device, comprising:
at least one processing unit; and
at least one memory coupled to the at least one processing unit and storing instructions for execution by the at least one processing unit, wherein the instructions, when executed by the at least one processing unit, cause the electronic device to perform the method of any of claims 1 to 13.

16. A computer-readable storage medium having stored a computer program thereon, wherein the computer program, when executed by a processor, implements the method of any of claims 1 to 13.

17. A computer program product comprising computer-executable instructions, wherein the computer-executable instructions, when executed by a processor, implement the method of any of claims 1 to 13.
